# EUROPEAN PATENT APPLICATION

(11) **EP 3 101 272 A1**
(43) Date of publication of application: **07.12.2016**
(21) Application number: 14880993.2
(22) Date of filing: 11.12.2014
(51) Int. Cl.: F03D 3/06

(54) **WIND GENERATOR TURBINE (VARIANTS)**

(30) Priority: 30.01.2014 EA 201400083
(71) Applicant: Noroian, Gevorg Serezaevih, Moscow 115582 (RU)
(72) Inventor: Noroian, Gevorg Serezaevih, Moscow 115582 (RU)
(74) Representative: Jeck, Anton
(86) International application number: PCT/EA2014/000022
(87) International publication number: WO 2015/113572

(57) **Abstract**

Die Gruppe von Erfindungen bezieht sich auf die Windindustrie. Sie betrifft insbesondere Ausgestaltungen von Windmotoren, die für den Betrieb in Windenergieanlagen mit unterschiedlicher Leistung vorgesehen sind. Die Turbine enthält radiale Schaufeln, die mit einer auf einer Welle angeordneten Schaufelscheibe verbunden sind, wobei jede Schaufel aus je einem oberen und einem unteren Flügel besteht, zwischen denen Zwischenflügel befestigt sind. Die oberen Flügel sind zu einer Seite geneigt so eingestellt, dass ihre eine Seite als ein Luftfanger wirkt. Die unteren Flügel sind so angeordnet, dass sie den oberen Flügeln entgegengesetzt geneigt sind. Gemäß der zweiten Ausgestaltung sind Zwischenflügel senkrecht oder schräg zum oberen Flügel aufgestellt. Die Erfindung zielt darauf ab, die elektrische Stromerzeugung in elektrischen Windmotoren zu steigern.

## Description

Die Gruppe von Erfindungen bezieht sich auf die Windindustrie. Sie betrifft insbesondere Ausgestaltungen von Windmotoren, die für den Betrieb in Windenergieanlagen mit unterschiedlicher Leistung auf Hügeln, in Steppen, in Wohn- und Produktions-raumen und in Uberwasser- und Landtransportmitteln vorgesehen sind.

Aus dem Stand der Technik ist eine Windturbine mit einer senkrechten Achse und radialen Luftzellen bekannt. Die Windturbine enthält eine Schaufelscheibe. Die Schaufelscheibe ist mit oberen und unteren radialen Schaufeln und Außenschaufeln versehen. Während der Scheibendrehung erfolgt die maximale Abwicklung der genannten Schaufeln, so dass eine Reihe von Luftzellen gebildet wird. Die Reibungs-widerstandskrafte sind in den gegenläufig rotierenden Abschnitten minimal, da die Schaufeln faltbar sind (PCT/KR 09/0808, "Erfindungen weltweit", Ausgabe 66 Heft 8/2011).

Die Mängel der aus dem Stand der Technik bekannten technischen Lösung sind eine verhältnismäßig kleine Arbeitsfläche der Schaufeln und großer Lärm bei der Abwicklung der Außenschaufeln. Ein weiterer Mangel ist, dass eine Lufttasche entstehen kann.

Der technische Effekt fur beide Ausgestaltungen der angemeldeten Erfindung ist eine erhöhte Stromerzeugung in den elektrischen Windmotoren dank der vergrößerten Nutzfläche der Turbine. Diese Nutzfläche (Arbeitsfläche) setzt sich aus den Flächen der oberen, der unteren und der Zwischenflügel (1. Ausgestaltung) zusammen. Des Weiteren besteht der technische Effekt darin, dass der auf die Turbine ausgeübte Druck durch die zusätzlichen Flügel vergrößert wird (2. Ausgestaltung).

Der technische Effekt wird in der Erfindung durch folgende Merkmale erreicht.

Gemäß der ersten Ausgestaltung der Erfindung wie auch im nachstkommenden Stand der Technik enthält die Turbine fur einen Windmotor radiale Schaufeln, die mit einer an einer Welle angebrachten Schaufelscheibe verbunden sind.

Die beanspruchte technische Lösung zeichnet sich gegenüber dem nächstkommenden Stand der Technik dadurch aus, dass jede Schaufel aus einem oberen und einem unteren Flügel besteht, wobei dazwischen Zwischenflügel befestigt sind. Die oberen Flügel sind zu einer Seite geneigt so eingestellt, dass ihre eine Seite (Rückfläche) als ein Luftfänger wirkt. Die oberen Flügel decken einander teilweise ab. Die unteren Flügel sind so angeordnet, dass sie den oberen Flügeln entgegengesetzt geneigt sind.

Die Zwischenflügel sind trapezförmig ausgebildet. Sie sind senkrecht oder schräg zum oberen Flügel aufgestellt. Dabei ist ihr niedriger Vorderteil zum Turbinenmittelpunkt ausgerichtet, um die gerichtete Luftzufuhr zum Turbinenmittelpunkt sicherzustellen.

Die Länge jedes Zwischenflügels kann der Schaufelbreite an der Zwischenflügeleinbaustelle gleich sein.

Eine andere Ausgestaltung der Erfindung sieht vor, dass die Länge jedes Zwischenflügels kleiner als die Schaufelbreite an der Zwischenflügeleinbaustelle ist. Bei dieser Ausgestaltung der Erfindung sind die Zwischenflügel dichter zueinander angebracht als bei der ersten Ausgestaltung.

Die Welle kann mit einem automatischen Schaltwerk ausgerüstet sein, um einen Winkel zwischen der Welle und den Schaufeln zu regeln.

Die Welle kann auch mit einem anderen automatischen Schaltwerk ausgerüstet sein, um einen Luftströmungsfangwinkel der Schaufeln zwischen 0° und 60° einzustellen, d. h. um die Schaufelverstellung zu regeln.

Bei Großturbinen konnen Laufräder (Rädchen, Laufrollen) unter die Schaufeln gesetzt werden. Die Laufräder fahren über spezielle Laufbahnen mit einem Anschlagrand. Der Anschlagrand verhindert es, dass die Schaufeln durch den Wind gehoben werden.

Die Schaufeln werden mit Hilfe von Zwischenflügeln wie Traggerüste gebaut.

Die Turbine fur den Windmotor nach der zweiten Ausgestaltung der Erfindung sowie beim nächstkommenden Stand der Technik enthält radiale Schaufeln, die mit einer an einer Welle angebrachten Schaufelscheibe verbunden sind.

Die zweite Ausgestaltung der beanspruchten technischen Lösung zeichnet sich gegenuber dem nachstkommenden Stand der Technik dadurch aus, dass jede Schaufel aus einem oberen und einem unteren Flügel besteht. Zwischen diesen Flügeln sind jeweils Zwischenflügel befestigt. Die oberen Flügel sind zu einer Seite geneigt aufgestellt und decken einander teilweise ab. Die unteren Flügel sind so angeordnet, dass sie den oberen Flügeln entgegengesetzt geneigt sind. Die Zwischenflügel sind senkrecht oder schräg zum oberen Flügel aufgestellt. Um eine sichere Aufstellung der Turbine zu gewährleisten, ist ihre Welle mit Hilfe von Balken am Standort befestigt. Die Balken sind mit tragenden Stützen verbunden. Die tragenden Stützen sind ihrerseits mit Spannseilen verbunden. Auf dem Balken und der tragenden Stütze sind dabei zusätzliche Flügel befestigt.

Die zusätzlichen Flügel können L-förmig ausgebildet sein. In diesem Fall besteht jeder zusätzliche Flügel aus zwei flachen, miteinander mechanisch zusammengefügten Rechtecken. Das eine Rechteck ist dabei horizontal angeordnet und am Balken befestigt. Das andere Rechteck ist senkrecht angeordnet und an der tragenden Stüntze befestigt.

Zusätzliche Flügel können mit einem Neigungswinkel von 45° eingestellt sein.

Die Erfindung wird anhand der Zeichnungen naher beschrieben. Es zeigen skizzenhaft:
- Fig. 1: die Turbine nach der zweiten Ausgestaltung (Draufsicht) und
- Fig. 2: die Turbine nach der zweiten Ausgestaltung (Schnitt).

Die Bezugszeichen bezeichnen folgende Bauteile:
- 1: - oberer Flügel;
- 2: - Zwischenflügel;
- 3: - letzter (randseitiger) Zwischenflügel;
- 4: - unterer Flügel;
- 5: - automatisches Schaltwerk, das für das Heben und Absenken der Schaufel zuständig ist;
- 6: - automatisches Schaltwerk zur Verstellung (Drehung) der Schaufeln;
- 7: - Becken zur Befestigung des Balkens fûr zusätzliche Flügel;
- 8: - Welle;
- 9: - Griffe der o. g. automatischen Schaltwerke;
- 10: - Hebel zur Kopplung der automatischen Schaltwerke und Schaufeln;
- 11: - Scheibe;
- 12: - Lager;
- 13: - Balken, der das auf der Welle angebrachte Becken 7 mit tragenden Stützen fur Seile verbindet;
- 14: - horizontaler Teil des zusätzlichen Flügels;
- 15: - senkrechter Teil des zusätzlichen Flügels;
- 16: - Schaufelscheibe, an der die Schaufeln befestigt sind;
- 17: - tragende Stützen für Seile;
- 18: - Zapfen, der die Schaufel mit der Schaufelscheibe verbindet;
- 19: - Drehachse der Schaufel;
- 20: - Spannseil;
- 21: - Abdeckung.

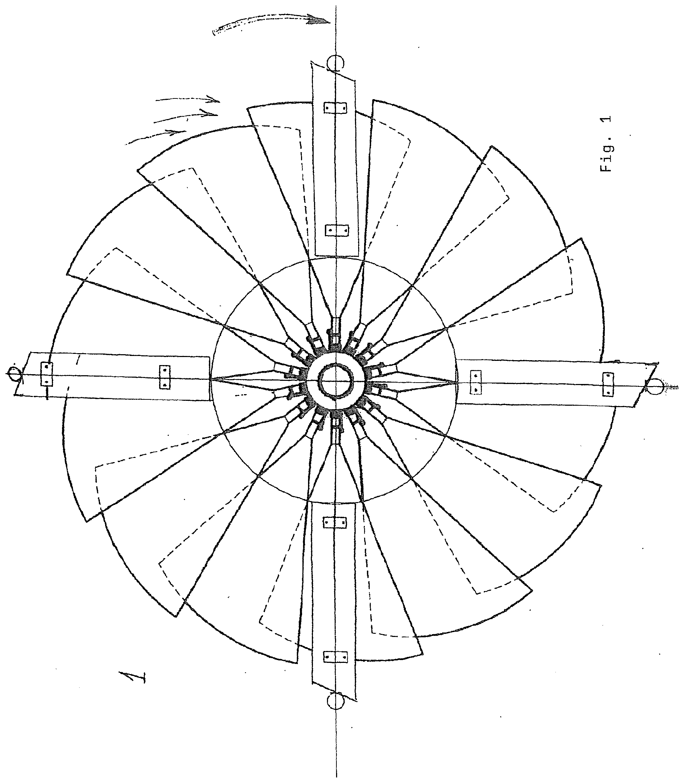

Aus der Fig. 1 ist ersichtlich, dass Turbinenschaufeln an der Schaufelscheibe 16 umlaufend befestigt sind. Die Anzahl der Turbinenschaufeln hängt sowohl von der Turbinengröße als auch von der Schaufelbreite ab. Dementsprechend, je mehr Schaufeln, desto mehr werden sie einander abdecken (desto mehr werden sie die oberen Flügel dieser Schaufeln abdecken.

Die oberen Flügel 1 sind schräg zur horizontalen Ebene angeordnet und decken einander teilweise ab. Der Luftströmungsfang-Grad durch die Turbinenschaufeln hängt von ihrem Neigungswinkel ab. Dieser Neigungswinkel ist einstellbar.

Die Zwischenflügel 2 sind trapezförmig ausgebildet. Sie sind an den oberen Flügeln mechanisch befestigt und können in einem beliebigen Winkel dazu angeordnet sein. Die Zwischenflügel übernehmen einen beachtlichen Teil des Luftdrucks, indem sie dem Wind Widerstand leisten. Gleichzeitig damit wirken sie als Versteifungsrippen der Schaufeln, ähnlich wie Traggerüste in einer Baukonstruktion. Die Zwischenflügel sind so angeordnet, dass die kleinere Trapezbasis zum Mittelpunkt der Turbine naher angebracht ist. Dadurch wird die Ausrichtung der Luftströmung zum Mittelpunkt der Turbine sichergestellt.

Die Zwischenflügel 2 können über die gesamte Breite des oberen Flügels angeordnet sein, oder sie können kürzer ausgebildet werden. Bei letzterem Fall müssen sie dichter gesetzt werden.

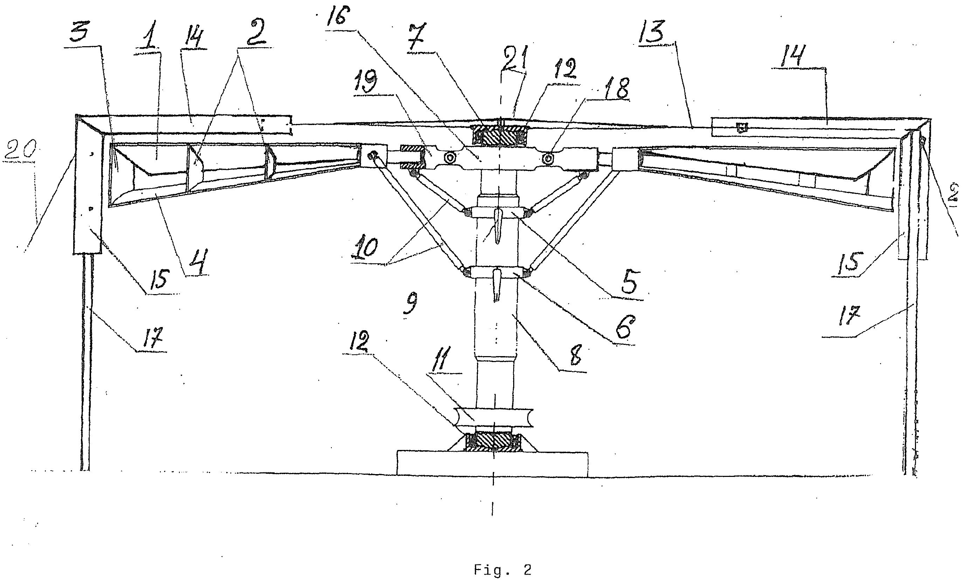

Der letzte Zwischenflügel 3 befindet sich am Rand der Außenpartie jeder Schaufel. Er tritt über die vorangehende Schaufel hervor (Fig. 1, 2) und fängt die Luftströmung über ihre gesamte Höhe ab.

Das Vorhandensein von Zwischenflügeln in den Turbinenschaufeln gemäß der beanspruchten technischen Lösung ist sehr wichtig, um den angemeldeten technischen Effekt zu erreichen. Daher werden die Höhe, die Länge und die Neigungswinkel sowohl zum oberen Flügel als auch zur Welle für jede Turbine getrennt berechnet.

Die unteren Flügel 4 sind unter den Zwischenflügeln angeordnet und damit mechanisch verbunden. Die unteren Flügel sind zu einer Seite geneigt, die der Neigung der oberen Flügel entgegengesetzt ist. Sie leisten der Luftströmung nicht nur Widerstand dadurch, dass sie zusätzliche Nutzfläche schaffen, sondern sie verhindern auch, dass die Schaufeln durch den Wind gehoben werden, denn der Wind drückt von oben darauf. Die unteren Flügel sind schmaler als die oberen ausgebildet.

Zwischen den unteren Flügeln ist ein kleiner Raum gebildet, um die abgenutzte Luftströmung abzuführen und um die Sicherheit beim Zusammenklappen der Schaufeln während stürmischer Winde zu gewährleisten, denn, wie bereits erwähnt, drückt die Luft auf diese Flügel von oben. Dadurch wird vermieden, dass der Wind die Schaufeln hebt.

Zwei automatische Regelschaltwerke 5 und 6 sind an der Welle 8 angebaut. Die automatischen Regelschaltwerke 5 und 6 sind mittels Hebel 10 mit jeder Schaufel verbunden. Eines der automatischen Schaltwerke regelt einen Luftströmungsfangwinkel durch die oberen Flügel der Schaufeln (zwischen 0° und 60°). Das zweite Schaltwerk regelt einen Winkel zwischen der Welle und den Schaufeln, so dass die Schaufeln bei starkem Wind sinken. Die automatischen Schaltwerke sind mechanisch oder hydraulisch ausgebildet, so dass die Überwachung des sicheren Turbinenbetriebs gewährleistet wird.

Der obere Teil der Welle 8 kann auf dem Aufstellort der Turbine mit Hilfe von Spannseilen 20 befestigt sein. In diesem Fall wird ein Becken 7 auf die Welle von oben auf ein Lager gesetzt. Das Becken 7 ist mit Löchern fur die Balken 13 versehen. An wenigstens drei Seiten der Turbine sind tragende Stützen 17 aufgestellt. Die tragenden Stützen 17 sind oben mit Osen fur Spannseile 20 versehen. Das Becken 7 ist mit Hilfe von Balken 13 mit tragenden Stützen 17 verbunden. An den Balken 13 sind zusätzliche Flügel befestigt, die z. B. L-förmig ausgebildet sind. Die längeren horizontalen Teile 14 der zusätzlichen Flügel sind am Balken schräg in einem Winkel befestigt, der mit dem Neigungswinkel der oberen Flügel 1 übereinstimmt und z. B. 45° beträgt. Die kürzeren senkrechten Teile 15 der zusätzlichen Flügel sind an tragenden Stutzen 17 befestigt und neigen zur gleichen Seite wie auch die letzten Zwischenflügel 3, und zwar z. B. im gleichen Winkel von 45°.

Bei jedem zusätzlichen Flügel handelt es sich um zwei flache elastische Rechtecke, die miteinander verbunden oder einzeln stehend sind. Die Länge und die Breite der Teile 14 und 15 der zusätzlichen Flügel können unterschiedlich sein und hängen von den Besonderheiten der jeweiligen Turbine ab.

Um die vertikale Stabilität der Konstruktion zu sichern, sind tragende Stützen 17 vorgesehen, die mittels Spannseilen 20 mit dem Aufstellungsort und mit der Turbinenwelle 8 verbunden sind.

Die beanspruchte Konstruktion ermöglicht auch die Höhenverstellung der tragenden Stützen unter Berücksichtigung der eventuell möglichen Höhenverstellung der Schaufeln.

Oberhalb der Turbinenmitte kann eine Blechabdeckung 21 eingesetzt werden, um die Turbine vor Witterungen (Niederschlägen) zu schutzen.

Bei Großturbinen ist es manchmal nicht möglich, Spannseile zu verwenden. In diesem Fall werden Räder (Rädchen, Rollen) unter die Schaufeln gesetzt, und darunter wird eine Laufbahn mit einem Anschlagrand angebracht. Dank dem Anschlagrand wird vermieden, dass die Schaufeln durch den Wind gehoben werden. Dabei kann es sich um mehrere Räder (Rädchen) und jeweilige Laufbahnen dafür handeln.

Die beanspruchte Bauweise der Turbinenschaufeln mit dem Einsatz der oben beschriebenen Flügel vergrößert die Nutzfläche der Turbine. Diese Nutzfläche setzt sich aus den Flächen der oberen, der unteren und der Zwischenflügel zusammen und stellt somit einen erhöhten Druck seitens der einwirkenden Luftströmung auf die Turbine sicher. Als Ergebnis entsteht der maximale Widerstand gegen die Windkräfte in den Abschnitten, die in Windrichtung drehen. Umgekehrt, die genannten Flügel an der anderen Seite der Turbine, die gegen den Wind läuft, stoßen die Luftströmung ab und vermindern somit ihren Druck auf die Turbinenschaufeln.

Die anströmende Luft kommt unter die oberen Flügel 1, nämlich in die Abschnitte, die zwischen den Zwischenflügeln 3 gebildet sind (s. Pfeile in Fig. 1). Die oberen Flügel 1 verdichten die Luftströmung und leiten diese in die Turbine hinab. Die Zwischenflügel 2 und 3 verdichten die Luftströmung und leiten sie zum Mittelpunkt der Turbine weiter. Die Luftströmung passiert zwei Barrieren und stößt auf die unteren Flügel 4, die die Luftströmung ihrerseits nach oben weiterleiten. Aber während die Luftströmung durch den unteren FICigel fließt, tritt ein Teil der Luftströmung aus den Turbinenschaufeln über eine Luftleitung hinaus, die in der Lücke zwischen den oberen und den unteren Flügeln gebildet ist. Dieser Teil der Luftströmung kommt dann in die nächste Schaufel. Der zweite Teil der Luftströmung bleibt im Abschnitt und erzeugt somit einen zusätzlichen Druck. Gleichzeitig fließt die Luftströmung von den Teilen 14 und 15 der zusätzlichen Flügel von oben und seitlich in die Turbine. Diese zusatzlichen Flügel erhöhen den Winddruck auf die Turbine. Die zusätzlichen Flügel an der Seite, bei der die Turbine gegen den Wind läuft, stoßen den Wind von der Turbine ab und vermindern somit teilweise die Windeinwirkung auf die Turbine.

Um die Turbinenkonstruktion zu verstarken, werden ihre Schaufeln ähnlich einem Traggerüst gebaut, indem die Zwischenflügel schräg zum oberen Flügel eingestellt werden, so dass die Zwischenflügel eine gebrochene Linie bilden.

## Claims

1. Turbine fur einen Windmotor mit radialen Schaufeln, die mit einer auf einer Welle angebrachten Schaufelscheibe verbunden sind, wobei jede Schaufel aus je einem oberen und einem unteren Flügel besteht, zwischen denen Zwischenflügel befestigt sind, dabei sind die oberen Flügel zu einer Seite so geneigt eingestellt, dass ihre eine Seite als ein Luftfänger wirkt und dass diese oberen Flügel einander teilweise abdecken, und die unteren Flügel sind so angeordnet, dass sie den oberen Flügeln entgegengesetzt geneigt sind, die Zwischenflügel sind dabei trapezförmig ausgebildet und senkrecht oder schräg zum oberen Flügel aufgestellt, und ihr niedriger Teil ist zum Turbinenmittelpunkt näher gesetzt, um die gerichtete Luftzufuhr zum Turbinenmittelpunkt sicherzustellen.

2. Turbine nach Anspruch 1,
**dadurch gekennzeichnet,**
**dass** die Länge jedes Zwischenflügels der Schaufelbreite an der Zwischenflügeleinbaustelle gleich ist.

3. Turbine nach Anspruch 1,
**dadurch gekennzeichnet,**
**dass** die Länge jedes Zwischenflügels kleiner als die Schaufelbreite an der Zwischenflügeleinbaustelle ist und
**dass** die Zwischenflügel dabei dicht zueinander angebracht sind.

4. Turbine nach Anspruch 1,
**dadurch gekennzeichnet,**
**dass** die Welle mit zwei automatischen Schaltwerken versehen ist,
**dass** das erste Schaltwerk einen Winkel zwischen der Welle und den Schaufeln regelt und
**dass** das zweite Schaltwerk einen Luftströmungsfangwinkel der Schaufeln zwischen 0° und 60° regelt.

5. Turbine nach Anspruch 1,
**dadurch gekennzeichnet,**
**dass** unter die Schaufeln Laufräder gesetzt sind, die über spezielle Laufbahnen mit einem Anschlagrand laufen, der verhindert, dass die Schaufeln durch den Wind gehoben werden.

6. Turbine nach Anspruch 1,
**dadurch gekennzeichnet,**
**dass** die Schaufeln wie Traggerüste mit Hilfe von Zwischenflügeln gebaut werden, um die Konstruktion zu versteifen.

7. Turbine fur Windmotor mit radialen Schaufeln, die mit einer an einer Welle angebrachten Schaufelscheibe verbunden sind, wobei jede Schaufel aus je einem oberen und einem unteren Flügel besteht, zwischen denen Zwischenflügel befestigt sind, dabei sind die oberen Flügel zu einer Seite geneigt aufgestellt und decken einander teilweise ab, und die unteren Flügel sind so angeordnet, dass sie den oberen Flügeln entgegengesetzt geneigt sind, die Zwischenflügel sind dabei senkrecht oder schräg zum oberen Flügel aufgestellt, und die Welle wird am Standort der Turbine mit Hilfe von Balken befestigt, die mit tragenden Stützen verbunden sind, welche ihrerseits mit Spannseilen verbunden sind, wobei auf dem Balken und auf der tragenden Stütze zusätzliche Flügel befestigt sind.
